# EUROPÄISCHE PATENTSCHRIFT

(11) **EP 3 036 811 B1**
(45) Veröffentlichungstag und Bekanntmachung des Hinweises auf die Patenterteilung: **14.11.2018**
(21) Anmeldenummer: 14749842.2
(22) Anmeldetag: 11.08.2014
(51) Int. Cl.: H02J 3/01, H02M 1/12

(54) **VERFAHREN UND VORRICHTUNG ZUM BETREIBEN EINES UMRICHTERS IN EINEM UMRICHTERBASIERTEN ENERGIEVERTEILUNGSSYSTEM SOWIE ENERGIEVERTEILUNGSSYSTEM MIT MEHREREN UMRICHTERBASIERTEN ENERGIEÜBERTRAGUNGSEINHEITEN**
METHOD AND DEVICE FOR OPERATING AN INVERTER IN AN INVERTER-BASED POWER DISTRIBUTION SYSTEM AND POWER DISTRIBUTION SYSTEM WITH MULTIPLE INVERTER-BASED ENERGY TRANSFER UNITS
PROCÉDÉ ET DISPOSITIF POUR FAIRE FONCTIONNER UN CONVERTISSEUR DANS UN SYSTÈME DE DISTRIBUTION D'ÉNERGIE BASÉ SUR UN ONDULEUR ET SYSTÈME DE DISTRIBUTION D'ÉNERGIE COMPRENANT PLUSIEURS UNITÉS DE TRANSMISSION D'ÉNERGIE BASÉES SUR UN ONDULEUR

(30) Priorität: 23.08.2013 EP 13181489
(43) Veröffentlichungstag der Anmeldung: 29.06.2016
(73) Patentinhaber: ABB Schweiz AG, 5400 Baden (CH)
(72) Erfinder: HAEDERLI, Christoph, CH-8047 Zürich (CH); THOMA, Marco, CH-5503 Schafisheim (CH); THURNHERR, Tobias, CH-5408 Ennetbaden (CH)
(74) Vertreter: Michalski Hüttermann & Partner Patentanwälte mbB
(86) Internationale Anmeldenummer: PCT/EP2014/067136
(87) Internationale Veröffentlichungsnummer: WO 2015/024803

(56) Entgegenhaltungen:
- US-A1- 2013 033 907

## Beschreibung

### Technisches Gebiet

Die Erfindung betrifft Stromnetze von Energieverteilungssystemen mit einer Vielzahl von umrichterbasierten Energieübertragungseinheiten, wobei durch die Energieübertragungseinheiten mithilfe von Umrichtern elektrische Energie in das Stromnetz eingebracht wird. Die Erfindung betrifft weiterhin Maßnahmen zur Reduzierung von Oberwellen in dem Stromnetz.

### Stand der Technik

Im Zuge der dezentralen Erzeugung und Einspeisung von Energie sind an Wechselstromnetzen in zunehmender Anzahl umrichterbasierte Energieübertragungseinheiten, z. B. in Form von Stromerzeugern, angeordnet, die durch ihren Aufbau und ihren Betrieb in hohem Maße Oberwellen in dem Stromnetz bewirken können. Des Weiteren führt die sich häufig ändernde Konfiguration des Energieverteilungssystems zu einer variierenden Impedanz, wodurch Resonanzen in verschiedenen variierenden Frequenzbereichen entstehen können.

Es ist jedoch erforderlich, am Anschlusspunkt des Energieverteilungssystems zu einem Stromverteilungsnetz nur einen geringen Anteil der übertragenen Oberwellen zuzulassen. Aus diesem Grund werden bislang zur Vermeidung eines zu hohen Oberwellenanteils in dem Stromverteilungsnetz die einzelnen Umrichter an den Energieübertragungseinheiten mit Filtern versehen, die den Anteil der Oberwellen reduzieren sollen. Da jedoch die elektrischen Eigenschaften des Energieverteilungssystems, insbesondere die Impedanz des Stromnetzes, möglicherweise variieren, können aufgrund von Resonanzen und/oder Verstärkungen von sich überlagernden Oberwellen selbst bei ordnungsgemäßer Filterung an den Kopplungsstellen Zustände entstehen, die am Anschlusspunkt des Energieverteilungssystems in das allgemeine Stromverteilungsnetz nicht toleriert werden können. Bislang werden an jedem Umrichter Filterschaltungen vorgesehen, die so dimensioniert werden, dass kritische Zustände möglichst vermieden werden können.

Die Druckschriften US 2010/0156192 A1 und US 2011/0260547 A1 offenbaren ein System mit einer Steuereinheit, das zwei Pulsweitenmodulationseinheiten aufweist, wobei jede der Pulsweitenmodulationseinheiten eine Basisfrequenz und ein Trägersignal erhält. Diese werden zur Erzeugung eines PWM-Musters verwendet, das einem entsprechenden netzseitigen Umrichter zugeführt wird. Die Steuereinheit verschachtelt die Trägersignale, die Basisfrequenzen oder eine Kombination aus diesen und erzeugt verschachtelte (*interleaved*) PWM-Muster für zwei Umrichter. Dadurch werden die Anforderungen bezüglich eines geringen Oberwellenanteils an einem Anschlusspunkt eines Energieverteilungssystems von mehreren Windturbinen erfüllt.

Die Druckschrift US 5,065 303 A offenbart eine Unterdrückung eines Oberwellenanteils mithilfe einer Serienschaltung von zwei Transformatoren.

Die Druckschrift US 2009/0322082 A1 offenbart ein Windturbinenenergieerzeugungssystem mit einer Umrichtersteuereinheit, die das Umrichtersystem betreibt, um den Oberwellenanteil an einer Anschlussstelle zu reduzieren. In diesem System werden die Oberwellen durch parallele Umrichter an einer Mehrfachwicklung eines Turbinentransformators unterdrückt.

Die Druckschrift CN 2013/32278 Y betrifft ein Energieverteilungssystem für eine Vielzahl von umrichterbasierten Energieübertragungseinheiten mit einer Blindleistungskompensation. Das System ist ausgebildet, um Spannungsschwankungen, die durch die Windgeneratoren verursacht werden, zu verringern und an den Kopplungsstellen eine Spannungsregelung vorzusehen. Auf diese Weise können Oberwellen eliminiert sowie eine unabhängige dezentralisierte Steuerung des Energieverteilungssystems gewährleistet werden.

Die Druckschrift EP 2 262 089 A1 offenbart ein Windturbinenstromerzeugungssystem mit mehreren Umrichtersträngen, die mit einem Generator verbunden sind, wobei eine Umrichtersteuerung vorgesehen ist, die jedem der Umrichterstränge eines von mehreren Schaltmustern bereitstellt, die teilweise auf den überwachten Betriebseigenschaften des Generators basieren. Durch den Interleaved-Betrieb der Umrichter mit Schaltmustern, bei denen jeder Umrichter mit phasenversetzten Ansteuersignalen angesteuert wird, wird der Oberwellenanteil durch Selbstauslöschen der Oberwellen reduziert.

Die Druckschrift US 2013/0033907 A1 offenbart ein Verfahren zum Betreiben eines Umrichters, wobei im Netz auftretende Harmonische bei der Erzeugung des Kommutierungsmusters des Konverters berücksichtigt werden.

Es ist Aufgabe der vorliegenden Erfindung, einen Umrichter für eine Energieübertragungseinheit sowie ein Energieverteilungssystem zur Verfügung zu stellen, die so betreibbar sind, dass beim Einspeisen oder Entnehmen von elektrischer Energie ein möglichst geringer Oberwellenanteil in einem Wechselstromnetz auftritt.

### Offenbarung der Erfindung

Diese Aufgabe wird durch das Verfahren zum Betreiben eines Umrichters in einem Energieverteilungssystem gemäß Anspruch 1 sowie durch den Umrichter, das Energieverteilungssystem und das Verfahren zum Betreiben von Umrichtern in einem Energieverteilungssystem gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist ein Verfahren zum Betreiben eines Umrichters in einem Energieverteilungssystem vorgesehen, wobei durch den Umrichter eine von einer Quelle bereitgestellte elektrische Energie an einer Kopplungsstelle in ein Wechselstromnetz eingespeist wird oder elektrische Energie an der Kopplungsstelle aus dem Wechselstromnetz entnommen wird, wobei das Wechselstromnetz mit weiteren Umrichtern zum Einspeisen oder Entnehmen von elektrischer Energie gekoppelt ist, wobei der Umrichter einen mit Leistungsschaltern versehenen Wechselrichter aufweist, um eine elektrische Größe bereitzustellen. Das Verfahren umfasst die folgenden Schritte:
- Bereitstellen einer Systemzustandsgröße, die einen Systemzustand des Stromnetzes angibt;
- Auswählen eines von mehreren Kommutierungsmustern abhängig von der Systemzustandsgröße; und
- Ansteuern des Wechselrichters entsprechend dem ausgewählten Kommutierungsmuster, wobei die Systemzustandsgröße eine Resonanzfrequenz des Energieverteilungssystems (1) umfasst, und das Kommutierungsmuster so ausgewählt wird, dass eine reduzierte oder keine Anregung bei der Resonanzfrequenz erfolgt.

Eine Idee des obigen Verfahrens zum Betreiben eines Umrichters besteht darin, abhängig von einem durch die eine Systemzustandsgröße angegebenen Systemzustand des Energieverteilungssystems eines von mehreren Kommutierungsmustern für einen Umrichter auszuwählen und diesen entsprechend anzusteuern. Dadurch kann insbesondere auf den Systemzustand des Stromnetzes Rücksicht genommen werden, der insbesondere aufgrund von variierenden Resonanzen großen Einfluss auf den Anteil an Oberwellen hat. Auf diese Weise ist es möglich, von mehreren Umrichtern bereitgestellte Kommutierungsmuster, deren Grundfrequenzen der elektrischen Größe gleichphasig sind, so zu wählen, dass sich Oberwellen einer bestimmten Harmonischen auf dem Stromnetz zumindest teilweise kompensieren, um so den gesamten Oberwellenanteil in dem Stromnetz zu reduzieren. Weiterhin ist es möglich, die Kommutierungsmuster so auszuwählen, das diese keine Harmonische beinhalten oder bewirken, die zu einer Resonanz führen können. Dies ist beispielsweise durch Anwenden eines SHE-Verfahrens möglich (SHE: Selective Harmonic Elimination).

Das Kommutierungsmuster resultiert aus der Anwendung eines Kommutierungsverfahrens und gibt eine generelle Schaltvorschrift für das Schalten von Leistungshalbleiterschaltern des Wechselrichters vor, um ausgangsseitig elektrische Größen mit vorgegebenen Verläufen bereitzustellen bzw. eingangsseitig ein bestimmtes elektrisches Verhalten zu bewirken. Dabei werden in bestimmter Abfolge eingangsseitig erhaltene Spannungswerte auf den Ausgang durchgeschaltet, so dass dadurch der ausgangsseitige Spannungsverlauf wählbar ist. Das Kommutierungsmuster zum Erreichen des Spannungsverlaufs kann als Schaltschema fest vorgegeben sein oder mithilfe einer Echtzeitberechnung, wie z.B. bei einer trägerbasierten Pulsweitenmodulation ermittelt werden.

Weiterhin kann das eine der mehreren Kommutierungsmuster abhängig von einer den Umrichter identifizierenden Identifikationsinformation ausgewählt werden.

Insbesondere kann die Systemzustandsgröße über eine externe Kommunikationsverbindung empfangen oder detektiert werden.

Weiterhin können die mehreren auswählbaren Kommutierungsmuster bei Bereitstellen einer phasengleichen Grundwelle der elektrischen Größe Oberwellen bewirken, die verschiedene Phasenlagen aufweisen und insbesondere gegenphasig vorgesehen werden.

Weiterhin können sich die mehreren Kommutierungsmuster durch ein Schaltmuster und/oder eine Schaltfrequenz voneinander unterscheiden.

Es ist erfindungsgemäß vorgesehen, dass die Systemzustandsgröße eine Angabe über eine Resonanzfrequenz des Energieverteilungssystems umfassen, wobei das Kommutierungsmuster so ausgewählt wird, dass keine Anregung bei der Resonanzfrequenz erfolgt.

Weiterhin kann das Kommutierungsmuster ein bereitgestelltes Schaltschema oder ein online generiertes insbesondere trägerbasiertes Schaltschema umfassen.

Gemäß einem weiteren Aspekt ist ein Umrichter für ein Energieverteilungssystem zum Einspeisen von durch eine Quelle bereitgestellter elektrischer Energie in ein Wechselstromnetz an einer Kopplungsstelle oder zum Entnehmen von elektrischer Energie aus dem Wechselstromnetz an der Kopplungsstelle vorgesehen, wobei weitere Umrichter zum Einspeisen oder Entnehmen von elektrischer Energie mit dem Wechselstromnetz gekoppelt sind, wobei der Umrichter einen mit Leistungsschaltern versehenen Wechselrichter zum Bereitstellen einer elektrischen Größe und eine Steuereinheit zum Ansteuern des Wechselrichters aufweist,
wobei die Steuereinheit ausgebildet ist, um
- eine Systemzustandsgröße, die einen Systemzustand des Wechselstromnetzes angibt, zu erhalten;
- eines von mehreren Kommutierungsmustern abhängig von der einen Systemzustandsgröße auszuwählen; und
- den Wechselrichters entsprechend dem ausgewählten Kommutierungsmuster anzusteuern.

Insbesondere kann die Steuereinheit ausgebildet sein, um die eine Systemzustandsgröße über eine externe Kommunikationsverbindung zu erhalten, wobei die Steuereinheit eine Erfassungseinheit aufweist, um die eine Systemzustandsgröße zu erfassen.

Gemäß einer Ausführungsform kann eine Speichereinheit zum Speichern einer Identifikationsinformation vorgesehen sein, so dass eines der mehreren Kommutierungsmuster abhängig von der Identifikationsinformation des Umrichters ausgewählt wird.

Gemäß einem weiteren Aspekt ist ein Energieübertragungssystem mit dem obigen Umrichter und mit einem Verbraucher, der elektrische Energie über den Umrichter bezieht, oder einer elektrischen Energiequelle, die elektrische Energie über den Umrichter in das Wechselstromnetz einspeist, vorgesehen.

Gemäß einem weiteren Aspekt ist ein Energieverteilungssystem mit mehreren der obigen Umrichter für mehrere Quellen elektrischer Energie vorgesehen, wobei die jeweiligen Umrichter so mit verschiedenen Auswahlschemata versehen sind, dass bei einem angegebenen Systemzustand von den Umrichtern Kommutierungsmuster ausgewählt werden, bei denen sich auf dem Wechselstromnetz für mindestens eine Oberwelle der elektrischen Größe zumindest eine teilweise Auslöschung ergibt.

Durch das Energieverteilungssystem mit mehreren derart betriebenen Umrichtern kann nun durch die Wahl von verschiedenen Kommutierungsmustern in den Umrichtern gemäß dem Auswahlschema erreicht werden, dass bei gleicher Phase und Frequenz der Grundwelle von Strom und/oder Spannung in dem Stromnetz die resultierenden Oberwellen phasengleich oder gegenphasig eingebracht werden, so dass der gesamte Oberwellenanteil entweder insgesamt oder in einem bestimmten Frequenzbereich reduziert wird.

Weiterhin können die Umrichter mit einem jeweiligen Kommutierungsmuster betrieben werden, das von dem Ort ihrer jeweiligen Kopplungsstelle im Wechselstromnetz abhängt.

Insbesondere können mindestens zwei der Umrichter ausgebildet sein, um mit komplementären Kommutierungsmustern betrieben zu werden, die die elektrischen Größen für mindestens eine Oberwelle in dem Wechselstromnetz gegenphasig bewirken.

Gemäß einer Ausführungsform kann eine Erfassungseinheit vorgesehen sein, um den Systemzustand zu erfassen und an einen oder mehrere der Umrichter zu kommunizieren.

Es kann mindestens eine Filtereinheit vorgesehen sein, um abhängig von dem Systemzustand eine Filterung von Oberwellen in dem Wechselstromnetz vorzunehmen.

Weiterhin können die Umrichter jeweils mit einem zugeordneten Auswahlschema ausgebildet sein, so dass diese mit Kommutierungsmustern betrieben werden, bei denen das resultierende definierte Oberwellenspektrum auf dem Wechselstromnetz zumindest in einem vorgegebenen Frequenzbereich minimiert ist.

Gemäß einem weiteren Aspekt ist ein Verfahren zum Betreiben von Umrichtern in dem obigen Energieverteilungssystem vorgesehen, wobei von jedem der Umrichter bei einem angegebenen Systemzustand gemäß dem zugeordneten Auswahlschema Kommutierungsmuster so ausgewählt werden, dass sich auf dem Wechselstromnetz für mindestens eine Oberwelle der elektrischen Größe zumindest eine teilweise Auslöschung ergibt.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Energieverteilungssystems mit mehreren umrichterbasierten Kopplungsstellen; und
- Figur 2: eine Darstellung eines Umrichters für ein Energieverteilungssystem nach Figur 1.
- Figur 3: eine schematische Darstellung eines beispielhaften Umrichters;
- Figuren 4a und 4b: Darstellungen von zwei Kommutierungsmustern für den Umrichter der Figur 3;
- Figur 5: ein Verlauf einer Ausgangsspannung des Umrichters der Figur 3;
- Figur 6: Strom- und Spannungsverlaufsdiagramme für den Fall zweier beispielhafter Umrichter;
- Figur 7: Strom- und Spannungsverlaufsdiagramme für den Fall zweier beispielhafter Umrichter; und
- Figur 8: Strom- und Spannungsverlaufsdiagramme für den Fall zweier beispielhafter Umrichter.

### Beschreibung von Ausführungsformen

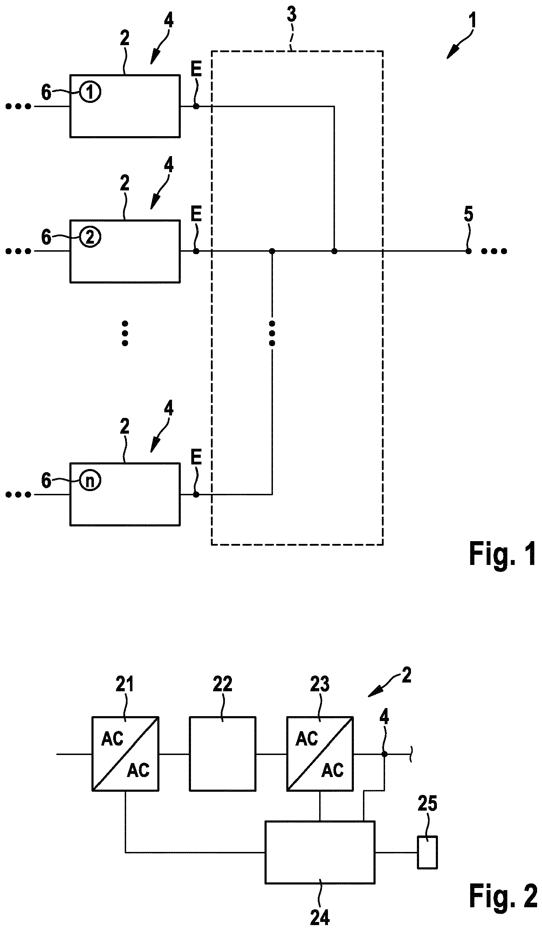

Figur 1 zeigt ein Energieverteilungssystem 1 mit mehreren umrichterbasierten Energieübertragungseinheiten 4. Die Energieübertragungseinheit 4 kann ausgebildet sein, um elektrische Energie an einer Kopplungsstelle E in ein Wechselstromnetz 3 einzuspeisen, das einem ein- oder mehrphasigen Wechselstromnetz entspricht. Die elektrische Energie kann durch Generatoren, wie beispielsweise Windkraftanlagen, durch Solarsysteme und ähnliche Energie erzeugende Systeme, bereitgestellt werden oder auch aus einem weiteren Netzwerk, das elektrische Energie bereitstellt, entnommen werden.

Weiterhin kann die Energieübertragungseinheit 4 auch zum Anschluss eines Verbrauchers vorgesehen sein, wobei die Energieübertragungseinheit 4 elektrische Energie aus dem Wechselstromnetz 3 entnimmt und dem Verbraucher in geeigneter Weise zur Verfügung stellt. Die Energieübertragungseinheit 4 kann weiterhin als STATCOM ausgebildet sein, die Wirkleistung aus dem Wechselstromnetz 3 bezieht und Blindleistung zur Verfügung stellt.

Das Energieverteilungssystem 1 kann ein Stromnetz zur Kopplung von Windkraftwerken in einem Windpark sein. Darüber hinaus kann das Energieverteilungssystem 1 ein Bahnnetz bzw. ein Bahnübertragungsnetz, ein Verteilnetz, ein Industrienetz, ein Schiffsnetz, ein Bordnetz, ein Inselnetz, ein Solarnetz, ein Netz mit HGÜ Ankopplung oder dergleichen umfassen. Grundsätzlich kann das Energieverteilungssystem 1 ein Netz umfassen, in das mittels Umrichtern Energie eingespeist und/oder aus dem mittels Umrichtern Energie entzogen wird.

Die Energieübertragungseinheiten 4 umfassen Umrichter 2, die über Kopplungsstellen E mit dem Stromnetz 3 verbunden sind. Die Umrichter 2 dienen im Wesentlichen dazu, die zur Verfügung gestellte elektrische Energie mit phasensynchroner Spannung in das Stromnetz 3 einzukoppeln oder im Falle von angeschlossenem Verbraucher die benötigte elektrische Energie aus dem wechselstromnetz 3 auszukoppeln. Die Einspeisung erfolgt, um die von dem Stromnetz 3 abgerufene elektrische Energie bzw. die zum Durchleiten durch das Stromnetz 3 zu einem Anschlusspunkt 5 vorgesehene elektrische Energie bereitzustellen.

An dem Anschlusspunkt 5 kann das Stromnetz 3 mit einem weiteren Stromverteilungsnetz (nicht gezeigt) verbunden werden, um die elektrische Energie entfernten Verbrauchern (nicht gezeigt) zuzuführen oder von entfernten Energiequellen zu erhalten.

In Figur 2 ist ein möglicher Umrichter 2 für eine Quelle elektrischer Energie als Energieübertragungseinheit 4 detaillierter dargestellt. Der Umrichter 2 ist ausgebildet, um von einem generatorischen Stromerzeuger, wie beispielsweise einer Windkraftanlage, elektrische Energie in Form eines ein- oder mehrphasigen Wechselstroms zu erhalten. Diese elektrische Energie wird einem ersten Wechselrichter 21 zugeführt, der die elektrische Energie in eine für einen nachfolgenden Transformator 22 geeignete Transformationsfrequenz umsetzt.

Der Transformator 22 dient zum einen einer galvanischen Trennung zwischen einer Eingangsseite (Primärseite) und einer Ausgangsseite (Sekundärseite) und wandelt zum anderen die bereitgestellte Wechselspannung in eine Wechselspannung innerhalb eines vorgegebenen Spannungsbereichs.

In einem sekundärseitig des Transformators 22 angeordneten zweiten Wechselrichter 23 wird die von dem Transformator 22 erhaltene elektrische Energie mit der an der Kopplungsstelle E vorliegenden elektrischen Wechselgröße in Phasenübereinstimmung gebracht. Die Einspeisung erfolgt in bekannter Weise durch eine entsprechende Ansteuerung des weiteren Wechselrichters 23, so dass ein Energiefluss in Richtung der Kopplungsstelle E erfolgen kann.

Der erste und der zweite Wechselrichter 21, 23 werden mithilfe einer Wechselrichtersteuerung 24 betrieben. Die Wechselrichtersteuerung 24 dient einerseits dazu, den ersten Wechselrichter 21 zum Bereitstellen einer elektrischen Wechselgröße mit einer für die Primärseite des Transformators 22 vorgesehenen Frequenz anzusteuern. Da der zweite Wechselrichter 23 zur Übertragung der elektrischen Energie in das Stromnetz 3 vorgesehen ist, dient die Wechselrichtersteuerung 24 andererseits dazu, die Phasenlage einer elektrischen Größe, insbesondere der Spannung, an der Kopplungsstelle E zu erfassen und eine entsprechende Wechselspannung einer geeigneten Phasenlage bereitzustellen, so dass ein Energiefluss in das Stromnetz 3 stattfinden kann.

Der zweite Wechselrichter 23 ist mit Leistungshalbleiterschaltern ausgeführt, die durch die Wechselrichtersteuerung 24 in geeigneter Weise gemäß einem Kommutierungsmuster geschaltet werden. Das Kommutierungsmuster gibt eine generelle Schaltvorschrift für das Schalten der Leistungshalbleiterschalter vor, um ausgangsseitig des zweiten Wechselrichters 23 entsprechende elektrische Größen bereitzustellen. Dabei werden in bestimmter Abfolge eingangsseitig erhaltene Spannungswerte auf den Ausgang durchgeschaltet, so dass dadurch der ausgangsseitige Spannungsverlauf wählbar ist. Obwohl die Grundwelle der einzukoppelnden elektrischen Größe festgelegt ist, bestehen mehrere Freiheitsgrade, diese durch verschiedene Kommutierungsmuster zu erzeugen.

Durch das Schalten der Leistungshalbleiterschalter im ersten und zweiten Wechselrichter 21, 23 entstehen neben den beabsichtigten ausgangsseitigen Wechselgrößen auch auf diesen basierende Oberwellen, die das Stromnetz 3 belasten und daher unerwünscht sind. Das Kommutierungsmuster bewirkt somit neben dem Bereitstellen einer elektrischen Spannung an der Kopplungsstelle E in der vorgegebenen Netzfrequenz auch das Einbringen von Oberwellen, die sich mit an anderen Kopplungsstellen E eingebrachten Oberwellen überlagern und verstärken können. Zudem können abhängig von einer insbesondere frequenzabhängigen Impedanz des Wechselstromnetzes 3 Resonanzen entstehen, wenn sich Oberwellen im Bereich einer Resonanzfrequenz des Wechselstromnetzes 3 überlagern und durch die Resonanz verstärken. Da aufgrund von wechselnder Topologie der an das Stromnetz 3 angeschlossenen Energieübertragungseinheiten 4 bzw. der am Anschlusspunkt 5 angelegten Last die Impedanz variiert, ist eine vorausschauende Filterung im Bereich einer Resonanzfrequenz nicht ausreichend.

Die Wechselrichtersteuerung 24 ist weiterhin mit einer Erfassungseinheit 25 verbunden, die den Systemzustand des Stromnetzes 3 anhand einer Systemzustandsgröße erfasst, insbesondere an dem Anschlusspunkt 5, an dem elektrische Energie in ein weiteres Stromverteilungsnetz übergeben werden kann. Die Erfassungseinheit 25 kann eine Sensoreinheit umfassen oder grundsätzlich ermöglichen, eine Systemzustandsgröße bereitzustellen, die insbesondere einen Zustand (z.B. in Form von variablen elektrischen Größen) des Wechselstromnetzes 3 angeben kann. Die Systemzustandsgröße kann auch an einem weiteren Punkt innerhalb des Stromnetzes 3 erfasst werden, wobei die Systemzustandsgröße so gewählt wird, dass diese mit dem Systemzustand an dem Anschlusspunkt 5 korreliert. Der weitere Punkt kann beispielsweise einem Kopplungspunkt von mindestens zwei umrichterbasierten Energieübertragungseinheiten 4 in dem Stromnetz 3 entsprechen.

Zum Ansteuern des weiteren Wechselrichters 23 kann die Wechselrichtersteuerung 24 nun vorsehen, verschiedene Kommutierungsmuster bereitzustellen, wobei das Kommutierungsmuster, mit dem der zweite Wechselrichter 23 angesteuert wird, gemäß einem Wert der erfassten oder zur Verfügung gestellten Systemzustandsgröße ausgewählt wird. Dazu sind in der Wechselrichtersteuerung die Schaltschemata für eine Reihe von Kommutierungsmustern gespeichert, so dass diese bedarfsgerecht abgerufen werden können. Die Kommutierungsmuster können so gewählt sein, dass Oberwellenfrequenzen in einem bestimmten Bereich vermieden werden können, z.B. bis zur 50-ten oder 100-ten Harmonischen

Weiterhin können die Kommutierungsmuster so gewählt sein, dass diese unterschiedliche Impedanzverläufe als Grundlage zur Berechnung voraussetzen und entsprechend angepasste Spektren aufweisen, um einen Systemzustand innerhalb einer vorgegebenen Anforderung zu erreichen.

Durch das Bereitstellen von verschiedenen Kommutierungsmustern, ist es möglich, basierend auf einer gemeinsamen Grundfrequenz sowie einer zu dem Wechselstromnetz 3 gleichphasigen Phasenlage verschiedene Oberwellenspektren für die verschiedenen Kommutierungsmuster zu erreichen. Insbesondere können bezüglich der Oberwellen phasengleiche und gegenphasige Oberwellen bewirkt werden. Insbesondere bewirkt die gleichphasige oder gegenphasige Einspeisung einer bestimmten Oberwelle in das Wechselstromnetz 3 eine Verstärkung bzw. eine Kompensation, die zu einer Erhöhung oder Verringerung des Anteils der entsprechenden Oberwelle in dem Wechselstromnetz 3 führen kann.

Das Kommutierungsmuster, das durch die Wechselrichtersteuerung 24 auswählbar ist, kann offline oder online generiert werden und umfasst trägerbasierte Pulsweitenmodulationsverfahren, Raumvektormodulationsverfahren oder andere damit zusammenhängende Verfahren. Insbesondere können auch Modulationsverfahren basierend auf einer variablen Trägerfrequenz verwendet werden, wodurch der Frequenzbereich des Hauptanteils der Oberwellen manipuliert werden kann.

Als Angaben über die Systemzustände können die aktuelle Impedanz und/oder die Übertragung von Wirk- und Blindleistung in dem Stromnetz 3 verwendet werden.

Als weitere Angaben über die Systemzustände kann eine Information über den aktuellen Schaltzustand des Wechselstromnetzes 3 verwendet werden, die es der Wechselrichtersteuerung 24 ermöglicht, alle relevanten Resonanzen im Gesamtsystem, insbesondere im Wechselstromnetz 3 zu berechnen. Aufgrund dieser Informationen können dann geeignete Kommutierungsmuster gewählt werden. Weiterhin kann die Systemzustandsgröße eine Angabe über zu vermeidende Frequenzen umfassen. Das gewählte Kommutierungsmuster kann dann so gewählt werden, dass die Oberwellen mit der zu vermeidenden Frequenz nicht generiert werden. Weiterhin kann die Systemzustandsgröße auch einer gemessenen Resonanzfrequenz entsprechen, die über eine spektrale Analyse der gemessenen elektrischen Größen erfasst wird.

Als Systemzustandsgröße kann der Wirkleistungsfluss in dem jeweiligen Umrichter 2, der Blindleistungsfluss in dem jeweiligen Umrichter 2, die Impedanz des Stromnetzes 3, die Übertragung von Wirk- und/oder Blindleistung durch das Stromnetz 3, die Topologie der angeschlossenen umrichterbasierten Kopplungsstellen E an dem Stromnetz 3 sowie die Art des Oberwellenspektrums an einem oder mehreren Abgreifpunkten, beispielsweise an dem Anschlusspunkt 5 oder an einer der Kopplungsstellen E, herangezogen werden. Auch mehrere der obigen Systemzustandsgrößen können bei der Wahl der Kommutierungsmuster berücksichtigt werden.

Insbesondere kann auch die Anordnung der Umrichter 2 an dem Stromnetz 3 zur Wahl des Kommutierungsmusters herangezogen werden. Beispielsweise kann jedem der Umrichter 2 eine Identifikationsinformation 6 zugeordnet werden, so dass die Wahl des entsprechenden Kommutierungsmusters anhand der Identifikationsinformation 6 vorgenommen wird. Insbesondere können bei fortlaufenden Identifikationsnummern als Identifikationsinformation 6 die Kommutierungsmuster danach ausgewählt werden, ob die Identifikationsnummer gerade oder ungerade ist. Auf diese Weise kann gewährleistet werden, dass die Kommutierungsmuster jeweils hälftig auf eine bestimmte Weise ausgewählt werden, so dass die Kommutierungsmuster mit gegenphasigen Oberwellen vorgesehen werden können, die geeignet sind, ihre Oberwellenanteile entsprechend gegeneinander zu kompensieren.

Insbesondere die Wirkleistung ist eine wichtige Systemzustandsgröße. Ein Wirkstrom bewirkt über einer Serienimpedanz von beispielsweise Transformatoren und Leitungen eine Phasenverschiebung der Spannungsgrundwelle. Die Wirkleistung einer einzelnen Energieübertragungseinheit 4 bewirkt daher eine Phasenverschiebung der Spannungsgrundwelle am Umrichter 2 gegenüber der Spannungsgrundwelle an einem gemeinsamen Bezugspunkt, wie beispielsweise dem Anschlusspunkt.

Die Serienimpedanz in typischen Energieverteilungssystemen ist meist induktiv und wird dabei von etwaig im Wechselstromnetz angeordneten Transformatoren dominiert. Die Phasenlage der Spannungsgrundwelle kann somit im Wesentlichen über die Wirkleistungen im Netz bestimmt werden. Die Phasenverschiebung zwischen den Kopplungsstellen E und dem Anschlusspunkt 5 kann z.B. durch Messung einer Amplitude der Wirkleistung durch einen im Stromnetz befindlichen Transformator und dessen Streuinduktivität bestimmt werden. Die Phasenverschiebung zwischen einem der Umrichter und der zugeordneten Kopplungsstelle E ist im Wesentlichen proportional zu Amplitude der Wirkleistung des betreffenden Umrichters und der effektiven Impedanz. Damit kann die Phasenlage zwischen dem Umrichter und dem Anschlusspunkt 5 als Summe der beiden obengenannten Phasenverschiebungen bestimmt werden.

Daraus kann dann die Phasenverschiebung von Oberwellen als N-faches Vielfaches (wobei N der Ordnungszahl der Harmonischen entspricht) der Phasenverschiebung der Grundwelle berechnet werden, da die Phasenverschiebung der einzelnen Oberwellen um das N-fache grösser ist. Damit hängen die Phasenlagen der Harmonischen gegeneinander wesentlich von der Phasenlage der Grundwelle und damit von der Wirkleistung ab.

Geeignete Kommutierungsmuster können nun derart ausgewählt werden, dass bestimmte Oberwellen am Anschlusspunkt 5 oder an einer Kopplungsstelle E kompensiert werden. Dabei kann entweder auf mehrere Leistungswerte zurückgegriffen werden, oder aber nur auf die Wirkleistung an der Kopplungsstelle E des Umrichters. Bei einer beispielhaften Ausführungsform, bei der die Wirkleistung nur am Anschlusspunkt des Umrichters erfasst wird, wird dem Umrichter in Abhängigkeit von einer Identifikationsinformation eine bevorzugte Phasenlage einzelner Oberwellen an der Kopplungsstelle E oder am Anschlusspunkt 5 vorgegeben. In Abhängigkeit der errechneten Phasenverschiebungen der einzelnen Oberwellen kann ein geeignetes Kommutierungsmuster gewählt werden. In einer anderen Ausführungsform werden die aufgrund der Systeminformation oder insbesondere der Wirkleistung errechneten Phasenlagen von einzelnen im Wechselstromnetz 3 vorhandenen Knoten errechnet und geeignete Kommutierungsmuster an die einzelnen Umrichter 2 verteilt.

In weiteren Ausführungsformen können in einer Energieübertragungseinheit 4 auch mehr als ein Umrichter 2 einer Quelle elektrischer Energie zugeordnet werden, wobei die mehreren Umrichter 2 mit verschiedenen Kommutierungsmustern angesteuert werden können, um bereits an der Kopplungsstelle E einen möglichst geringen Oberwellenanteil zu erhalten.

Zusätzlich zu den Umrichtern 2 können auch Filterschaltungen zwischen dem Umrichter 2 und der Kopplungsstelle E angeordnet werden, um den Oberwellenanteil für alle oder einen Teil der Oberwellen zu reduzieren.

Grundsätzlich kann die Wahl eines geeigneten Kommutierungsmusters abhängig von dem Systemzustand auch auf die lokal gewählte Transformator- und/oder Filterkonfiguration abgestimmt werden. Lokal bedeutet in diesem Zusammenhang die Transformator- und/oder Filterkonfiguration einer Energieübertragungseinheit 4 bzw. eines Clusters von Energieübertragungseinheiten 4.

Die Erfassungseinheit 25 kann zentral für alle Umrichter 2 bereitgestellt werden oder jeder der Umrichter 2 kann mit einer dieser zugeordneten Erfassungseinheit 25 versehen sein.

Die Kommutierungsmuster können ausgewählt sein, um den Anteil einzelner oder aller Oberwellen zu reduzieren. Insbesondere können die Kommutierungsmuster so gewählt sein, dass Anteile bestimmter Oberwellen reduziert werden.

Dazu werden die Kommutierungsmuster so ausgewählt, dass diese die Oberwellen mit einer bestimmten Phasenlage bereitstellen, so dass sich die Phasenlagen der bestimmten Oberwelle gegenseitig kompensieren.

Die Auswahl der Kommutierungsmuster kann aus einer Menge von bereitgestellten Kommutierungsmustern zufällig erfolgen. Weiterhin können die Kommutierungsmuster entsprechend ihren Phasenlagen der Oberwelle gruppiert sein, so dass zum Reduzieren eines Anteils einer bestimmten Oberwelle die Kommutierungsmuster aus entsprechenden Gruppen von Kommutierungsmustern ausgewählt werden, bei denen sich der Anteil der entsprechenden Oberwelle reduziert.

Als Erfassungspunkt für den Systemzustand kann auch ein Verbindungspunkt von mehreren Gruppen (Clustern) von umrichterbasierten Kopplungsstellen E gewählt werden.

Um bestimmte Resonanzfrequenzen in dem Stromnetz 3 zu vermeiden, kann die Resonanzfrequenz auch durch eine zentrale oder lokale Messung bzw. basierend auf Berechnungen als Funktion des Systemzustands bestimmt und die Wahl des Kommutierungsmusters in den Umrichtern 2 basierend auf den bestimmten Resonanzfrequenzen vorgenommen werden.

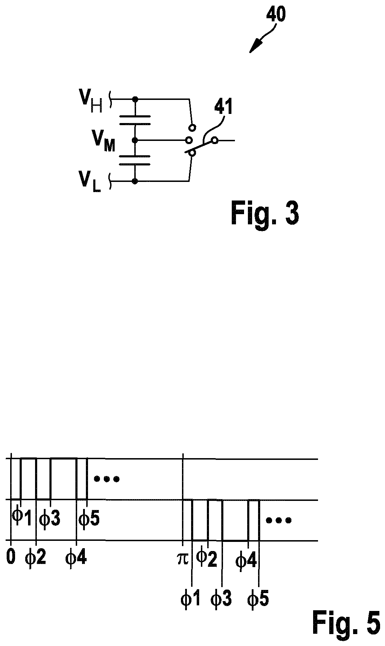

In Figur 3 ist ein einfacher Umrichter 40 als ein 3-Pegel-Spannungsumrichter mit einem Schalter 41 skizziert, dessen Schaltzustände mithilfe eines Kommutierungsmusters vorgebbar sind. Der Umrichter 40 ist ausgebildet, um eines von drei Spannungspotenzialen auf den Phasenausgang zu schalten. Dazu ist der Umrichter 40 an ein hohes Versorgungspotential V_{H} und ein niedriges Versorgungspotenzial V_{L} angeschlossen, wobei durch einen Schaltvorgang zwischen einem der Versorgungspotenziale und einem bereitgestelltem Mittenpotenzial V_{M} geschaltet wird.

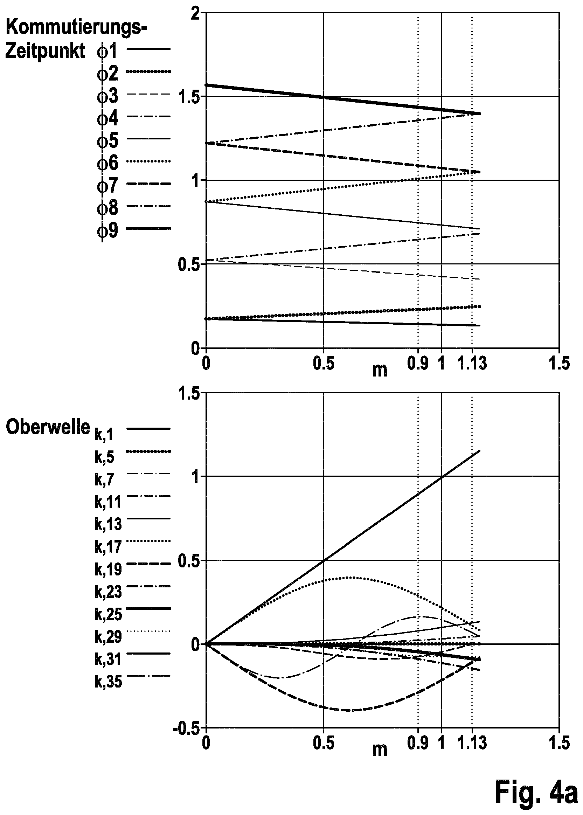

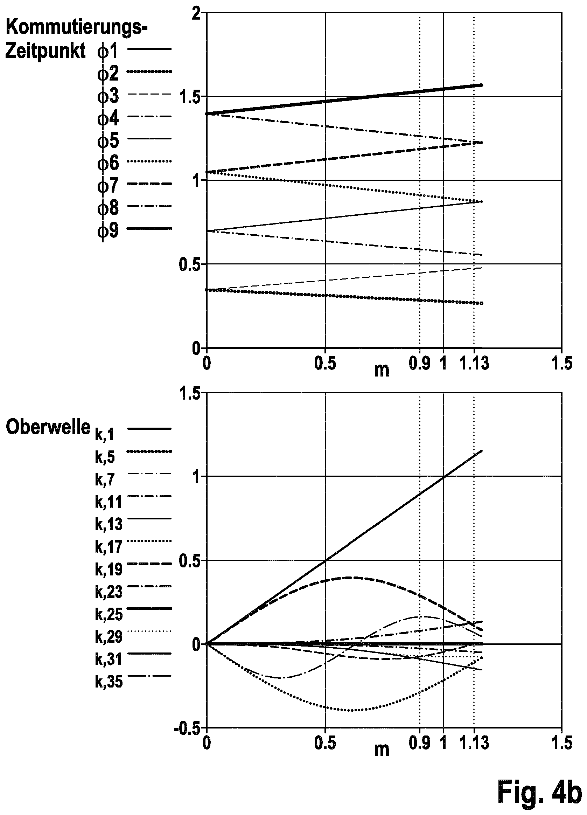

In den Figuren 4a und 4b sind für ein beispielhaftes Energieübertragungssystem mit dem Umrichter 40 der Figur 3 zwei Kommutierungsmuster und die daraus resultierenden Oberwellenanteile von ausgewählten Harmonischen dargestellt. Die Figuren 4a und 4b zeigen über einem Ansteuerungsgrad m die Verläufe von aufeinanderfolgenden Kommutierungszeitpunkten Φ1 bis Φ9 als Zeitpunkte für einen Schaltvorgang, wobei zu jedem Schaltvorgang ein Wechsel der Ausgangsspannung von einem der Versorgungsspannungen V_{H}, V_{L} zu dem Mittenpotenzial V_{M}. Die Kommutierungszeitpunkte geben jeweils den Zeitabstand in Form eines Phasenwinkels relativ zum Nulldurchgang der Spannungsgrundwelle an. Bei den angegebenen Kommutierungsmustern wurde jeweils eine Viertelwellensymmetrie angewendet.

Es sind für die zwei Kommutierungsmuster jeweils 9 Kommutierungszeitpunkte Φ1 bis Φ9 dargestellt, die die Schaltwinkel im Bereich von 0 bis π/2 abhängig von einem Ansteuerungsgrad m angeben. Ein beispielhafter Verlauf der Ausgangsspannung für einen Ansteuerungsgrad m wird durch das Signal-Zeit-Diagramm der Figur 5, die den Verlauf der Ausgangsspannung des Umrichters 40 schematisch darstellt, verdeutlicht.

Weiterhin geben die jeweils unteren Diagramme der Figuren 4a und 4b beispielhaft den Anteil von Oberwellen der 1., 5., 7., 11., 13., 17., 19., 23., 25., ,29., 31., und 35. Harmonischen abhängig von dem Ansteuerungsgrad m an.

Man erkennt einen Phasenwechsel zwischen den beiden Kommutierungsmustern anhand des Vorzeichens des Oberwellenanteils der betreffenden Oberwelle. Positives Vorzeichen entspricht einer zu der Grundwelle auf dem Wechselstromnetz 3 synchronen Oberwelle und negatives Vorzeichen einer zu der Grundwelle auf dem Wechselstromnetz 3 um 180° phasenverschobenen Oberwelle. Daher können sich Oberwellen mit bezüglich der beiden Kommutierungsmuster unterschiedlichem Vorzeichen kompensieren. Man erkennt, dass für die beiden Kommutierungsmuster
- nur eine sehr geringer Anteil der 5. und 7. Harmonischen vorhanden ist,
- die 11., 13., 17., 19. und 23. Harmonische einander entgegengesetzte Phasenlagen aufweisen und sich dadurch kompensieren;
- die 25. Harmonische ist praktisch nur in dem ersten Kommutierungsmuster der Figur 3a vorhanden; und
- die 29., 31. Und 35. Harmonischen sind in Phase und verstärken sich daher.

Mit den obigen Kommutierungsmustern lassen sich zwar nicht alle Oberwellen eliminieren, es ist jedoch eine Anpassung an die Gegebenheiten des Wechselstromnetzes 3 möglich, um einen gewünschten Systemzustand zu erreichen.

Im Wesentlichen kann vorgesehen sein, dass die Wechselrichtersteuerungen 24 der Energieübertragungseinheiten 4 die zweiten Wechselrichter 23 unabhängig von einer zentralen Steuereinheit ansteuern. Die Wechselrichtersteuerungen 24 erfassen eine oder mehrere Systemzustandsgrößen und wählen ein Kommutierungsmuster aus mehreren bereitgestellten Kommutierungsmustern so aus, dass durch Überlagerung von allen oder bestimmten Oberwellen, die auf der gemeinsamen Grundwelle der elektrischen Größe, wie beispielsweise der Spannung oder des Stroms, in dem Stromnetz 3 basieren, eine Auslöschung in einem, mehreren oder allen Oberwellenbereichen erreicht wird. Alternativ können die Informationen auch zentral erfasst und auf die einzelnen Umrichter 2 verteilt werden.

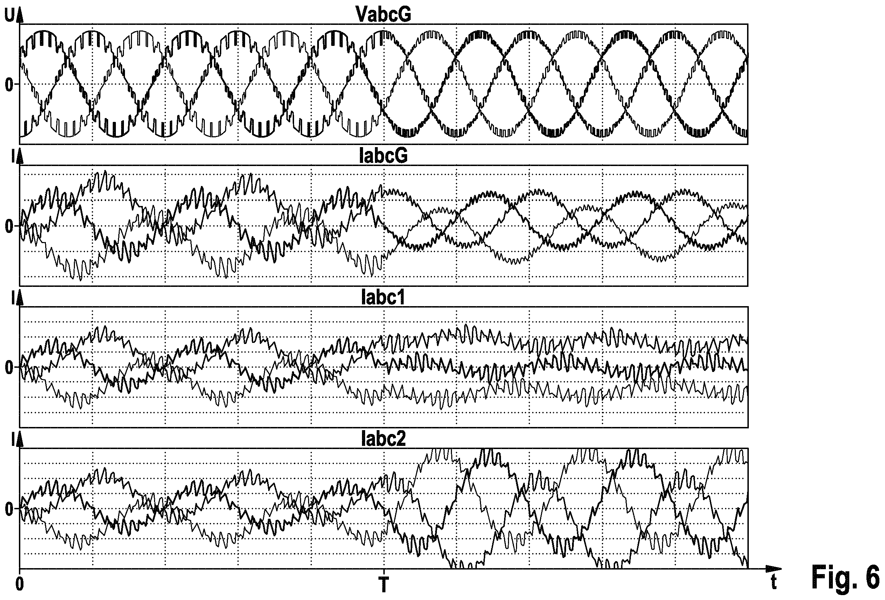

Figur 6 zeigt Strom- und Spannungsverlaufsdiagramme für den Fall zweier beispielhafter Umrichter mit identischen Kommutierungsmustern und einem gemeinsamen Anschlusspunkt. Iabc1 entspricht dem Strom in drei Phasen an dem Anschlusspunkt (Kopplungsstelle E) von Umrichter 1, Iabc2 entspricht dem Strom an dem Anschlusspunkt von Umrichter 2 und labcG entspricht dem Summenstrom an dem Anschlusspunkt. VabcG entspricht der Spannung an dem Anschlusspunkt. Die Verläufe der gezeigten elektrischen Größen betreffen eine erste Betriebsphase, bei dem die Umrichter den gleichen Fundamentalstrom aufweisen, vor einem Zeitpunkt T und eine zweite Betriebsphase nach dem Zeitpunkt T, ab dem einer der Umrichter mehr Wirkleistung übernimmt. Man erkennt in der zweiten Betriebsphase, dass sich der Strom des betreffenden Umrichters gegenüber dem anderen Umrichter vergrössert. In der zweiten Betriebsphase ist zu erkennen, wie die dominanten Harmonischen wegen der Phasenverschiebung auf Grund der Wirkstromverschiebung kompensiert werden. Das ist sowohl im Summenstrom wie auch in der Spannung am Anschlusspunkt zu erkennen.

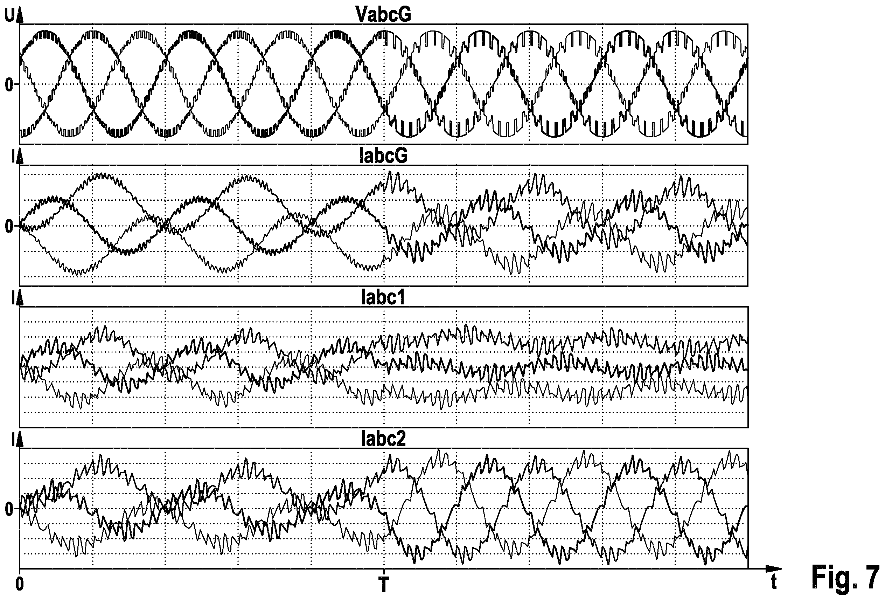

Figur 7 zeigt Strom- und Spannungsverlaufsdiagramme für den Fall zweier Umrichter mit komplementären Kommutierungsmustern und einem gemeinsamen Anschlusspunkt. Iabc1 entspricht dem Strom in drei Phasen am Anschlusspunkt eines ersten Umrichters, Iabc2 entspricht dem Strom am Anschlusspunkt des zweiten Umrichter. IabcG entspricht dem Summenstrom am Anschlusspunkt und VabcG der Spannung am Anschlusspunkt. In einer ersten Betriebsphase haben die Umrichter denselben Fundamentalstrom. In der zweiten Betriebsphase ab dem Zeitpunkt T übernimmt der zweite Umrichter mehr Wirkleistung und der Strom des zweiten Umrichters vergrössert sich gegenüber dem des ersten Umrichters.

Im Gegensatz zu Figur 6 kompensieren sich die Harmonischen nun bei gleicher Wirkleistung während der ersten Betriebsphase. Bei einer Phasenverschiebung auf Grund der Wirkstromverschiebung hebt sich dieser Effekt auf und eine höhere Verzerrung in Summenstrom und Spannung ist zu erkennen.

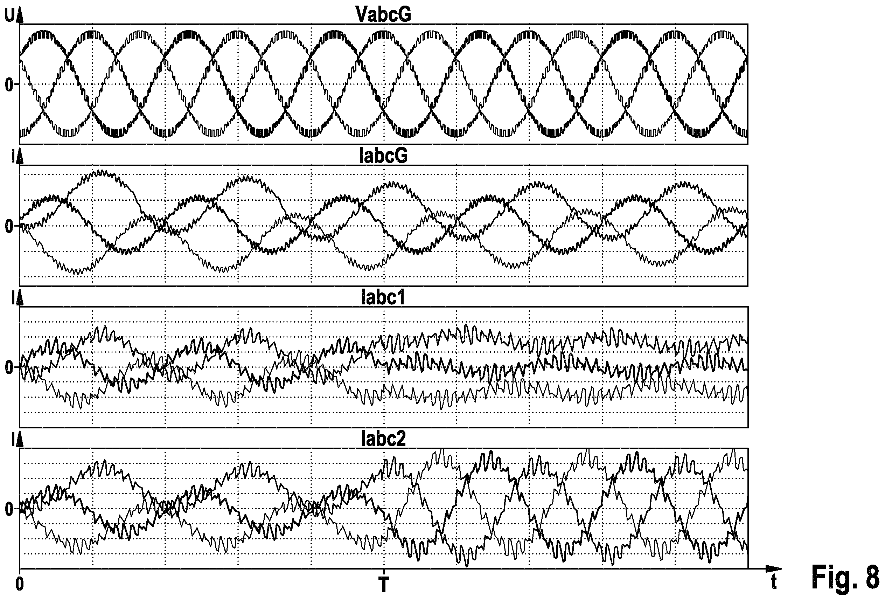

Figur 8 verdeutlicht ein Beispiel wie die zuvor verdeutlichten Systemverhalten eingesetzt werden können. Figur 8 zeigt Strom- und Spannungskurven für den Fall von zwei Umrichtern mit einem gemeinsamen Anschlusspunkt. Zum Zeitpunkt T wird von einer ersten Betriebsphase zu einer zweiten Betriebsphase eine Umschaltung des Kommutierungsmusters bei einem gleichzeitigen Leistungssprung vorgenommen. Währned der ersten Betriebsphase werden die Umrichter mit komplementären Kommutierungsmustern angesteuert. Zum Zeitpunkt T übernimmt der zweite Umrichter mehr Wirkleistung und der Strom des zweiten Umrichters vergrössert sich gegenüber dem des ersten Umrichters. Gleichzeitig wird das Kommutierungsmuster in dem zweiten Umrichter umgeschaltet, so dass beide Umrichter mit gleichen Kommutierungsmustern betrieben werden. Auf diese Weise kann trotz Leistungsverschiebung ein vorteilhafter Betrieb erreicht werden, der über die Betriebsphasen einen niedrigen Anteil an Oberwellen am Anschlusspunkt bewirkt.

### Bezugszeichenliste

- 1: Energieverteilungssystem
- 2: Umrichter
- 21: erster Wechselrichter
- 22: Transformator
- 23: zweiter Wechselrichter
- 24: Wechselrichtersteuerung
- 25: Erfassungseinheit
- 3: Stromnetz
- 4: Energieübertragungseinheit
- 5: Anschlusspunkt
- 6: Identifikationsnummer
- E: Kopplungsstelle

## Patentansprüche

1. Verfahren zum Betreiben eines Umrichters (2) in einem Energieverteilungssystem (1), wobei durch den Umrichter (2) eine von einer Quelle bereitgestellte elektrische Energie an einer Kopplungsstelle (E) in ein Wechselstromnetz (3) eingespeist wird oder elektrische Energie an der Kopplungsstelle (E) aus dem Wechselstromnetz (3) entnommen wird,
das Wechselstromnetz (3) an weiteren Kopplungsstellen (E) mit weiteren Umrichtern (2) zum Einspeisen oder Entnehmen von elektrischer Energie gekoppelt ist,
das Wechselstromnetz (3) an einem Anschlusspunkt (5) mit einem weiteren Stromverteilungsnetz verbunden werden kann, um die elektrische Energie entfernten Verbrauchern zuzuführen oder von entfernten Energiequellen zu erhalten, und
der Umrichter (2) einen mit Leistungsschaltern versehenen Wechselrichter (23) aufweist, um eine elektrische Größe bereitzustellen, umfassend die folgenden Schritte:
Bereitstellen einer Systemzustandsgröße, die einen Systemzustand des Stromnetzes (3) angeben;
Auswählen eines von mehreren Kommutierungsmustern abhängig von der Systemzustandsgröße; und
Ansteuern des Wechselrichters (23) entsprechend dem ausgewählten Kommutierungsmuster, **dadurch gekennzeichnet, dass**
die Systemzustandsgröße eine Resonanzfrequenz des Energieverteilungssystems (1) umfasst, und
das Kommutierungsmuster so ausgewählt wird, dass eine reduzierte oder keine Anregung bei der Resonanzfrequenz erfolgt.

2. Verfahren nach Anspruch 1, wobei das eine der mehreren Kommutierungsmuster abhängig von einer den Umrichter (2) identifizierenden Identifikationsinformation (6) ausgewählt wird.

3. Verfahren nach Anspruch 1 oder 2, wobei die eine oder die mehreren Systemzustandsgrößen
über eine externe Kommunikationsverbindung empfangen oder erfasst werden.

4. Verfahren nach einem der Ansprüche 1 bis 3, wobei die mehreren auswählbaren Kommutierungsmuster bei Bereitstellen einer phasengleichen Grundwelle der elektrischen Größe Oberwellen bewirken, die verschiedene Phasenlagen aufweisen und insbesondere gegenphasig vorgesehen werden.

5. Verfahren nach einem der Ansprüche 1 bis 4, wobei sich die mehreren Kommutierungsmuster durch eine Schaltvorschrift und/oder eine Schaltfrequenz voneinander unterscheiden.

6. Verfahren nach einem der Ansprüche 1 bis 5, wobei die Systemzustandsgröße mindestens eine der folgenden Größen umfassen:
eine Angabe über eine an der Kopplungsstelle (E) vorliegende Wirk- und/oder Blindleistung;
eine Angabe über ein Oberwellenspektrum der elektrischen Größe an dem Anschlusspunkt (5) im Stromnetz (3);
eine Angabe über eine Impedanz oder einen frequenzabhängigen Impedanzverlauf des Stromnetzes (3) an zumindest einem Punkt des Wechselstromnetzes;
eine Angabe über eine durch das Stromnetz (3) übertragene Wirk- bzw. Blindleistung; und
eine Angabe über eine Konfiguration des Energieverteilungssystems.

7. Verfahren nach einem der Ansprüche 1 bis 6, wobei das Kommutierungsmuster ein vorgegebenes Schaltschema oder ein online generiertes insbesondere trägerbasiertes Schaltschema umfasst.

8. Energieverteilungssystem (1) mit mehreren Umrichtern (2) zum Einspeisen von durch mehrere Quellen bereitgestellter elektrischer Energie in ein Wechselstromnetz (3) an einer Kopplungsstelle (E) oder zum Entnehmen von elektrischer Energie aus dem Wechselstromnetz (3) an der Kopplungsstelle (E), wobei
das Wechselstromnetz (3) an einem Anschlusspunkt (5) mit einem weiteren Stromverteilungsnetz verbunden werden kann, um die elektrische Energie entfernten Verbrauchern zuzuführen oder von entfernten Energiequellen zu erhalten,
jeder Umrichter (2) einen mit Leistungsschaltern versehenen Wechselrichter (21) zum Bereitstellen einer elektrischen Größe sowie eine Steuereinheit (24) zum Ansteuern des Wechselrichters (21) aufweist,
die Steuereinheit (24) ausgebildet ist, um eine Systemzustandsgröße, die einen Systemzustand des Wechselstromnetzes (3) angibt, zu erhalten, eines von mehreren Kommutierungsmustern abhängig von der Systemzustandsgröße auszuwählen und den Wechselrichter (21) entsprechend dem ausgewählten Kommutierungsmuster anzusteuern, **gekennzeichnet dadurch, dass**
die Systemzustandsgröße eine Resonanzfrequenz des Energieverteilungssystems (1) umfasst, und
das Kommutierungsmuster so ausgewählt wird, dass eine reduzierte oder keine Anregung bei der Resonanzfrequenz erfolgt.

9. Energieverteilungssystem (1) nach Anspruch 8, wobei die Steuereinheit (24) ausgebildet ist, um die eine oder die mehreren Systemzustandsgrößen über eine externe Kommunikationsverbindung zu erhalten und/oder wobei die Steuereinheit (24) eine Erfassungseinheit (25) aufweist, um die eine oder die mehreren Systemzustandsgrößen zu erfassen.

10. Energieverteilungssystem (1) nach Anspruch 8 oder 9, wobei eine Speichereinheit zum Speichern einer Identifikationsinformation (6) vorgesehen ist, so dass eines der mehreren Kommutierungsmuster abhängig von der Identifikationsinformation (6) des Umrichters (2) ausgewählt wird.

11. Energieverteilungssystem (1) nach einem der Ansprüche 8 bis 10 und mit einem Verbraucher, der elektrische Energie über einen der Umrichter (2) bezieht, oder einer elektrischen Energiequelle, die elektrische Energie über einen der Umrichter (2) in das Wechselstromnetz (3) einspeist.

12. Energieverteilungssystem (1) nach einem der Ansprüche 8 bis 10, wobei die jeweiligen Umrichter (2) so mit verschiedenen Auswahlschemata versehen sind, dass bei einem angegebenen Systemzustand von den Umrichtern (2) Kommutierungsmuster ausgewählt werden, bei denen sich auf dem Wechselstromnetz (3) für mindestens eine Oberwelle der elektrischen Größe zumindest eine teilweise Auslöschung ergibt.

13. Energieverteilungssystem (1) nach einem der Ansprüche 7 bis 11, wobei die Umrichter (2) mit einem jeweiligen Kommutierungsmuster betrieben werden, das von dem Ort ihrer jeweiligen Kopplungsstelle (E) im Stromnetz (3) abhängt.

14. Energieverteilungssystem (1) nach einem der Ansprüche 7 oder 12, wobei mindestens zwei der Umrichter (2) ausgebildet sind, um mit komplementären Kommutierungsmustern betrieben zu werden, die die elektrischen Größen für mindestens eine Oberwelle in dem Wechselstromnetz (3) gegenphasig bewirken.

15. Energieverteilungssystem (1) nach einem der Ansprüche 12 bis 14, wobei eine Erfassungseinheit (25) vorgesehen ist, um den Systemzustand zu erfassen und an einen oder mehrere der Umrichter (2) zu kommunizieren.

16. Energieverteilungssystem (1) nach einem der Ansprüche 12 bis 15, wobei mindestens eine Filtereinheit vorgesehen ist, um eine Filterung von Oberwellen in dem Stromnetz (3) abhängig von dem Systemzustand vorzunehmen.

17. Energieverteilungssystem (1) nach einem der Ansprüche 12 bis 16, wobei die Umrichter (2) jeweils mit einem zugeordneten Auswahlschema ausgebildet sind, so dass diese mit Kommutierungsmustern betrieben werden, bei denen das resultierende definierte Oberwellenspektrum auf dem Wechselstromnetz (3) zumindest in einem vorgegebenen Frequenzbereich minimiert ist.

18. Verfahren zum Betreiben von mehreren Umrichtern (2) in einem Energieverteilungssystem
(1) nach einem der Ansprüche 12 bis 17, wobei von jedem der Umrichter (2) bei einem angegebenen Systemzustand gemäß dem zugeordneten Auswahlschema Kommutierungsmuster so ausgewählt werden, dass sich auf dem Wechselstromnetz (3) für mindestens eine Oberwelle der elektrischen Größe zumindest eine teilweise Auslöschung ergibt.

## Claims

1. A method for operating a converter (2) in an energy distribution system (1), wherein, by means of the converter (2), an electrical energy provided by a source is fed into an AC electricity network (3) at a coupling point (E) or electrical energy is drawn from the AC electricity network (3) at the coupling point (E),
the AC electricity network (3) is coupled at further coupling points (E) to further converters (2) for feeding in or drawing electrical energy,
the AC electricity network (3) can be connected to a further electricity supply network at a connection point (5) in order to feed the electrical energy to remote loads or to obtain the electrical energy from remote energy sources, and
the converter (2) has an inverter (23) provided with power switches in order to provide an electrical variable, said method comprising the following steps:
providing a system state variable indicating a system state of the electricity network (3);
selecting one of a plurality of commutation patterns depending on the system state variable; and
driving the inverter (23) according to the selected commutation pattern, **characterised in that**
the system state variable comprises a resonance frequency of the energy distribution system (1), and
the commutation pattern is selected such that a reduced or no excitation takes place at the resonance frequency.

2. The method according to claim 1, wherein the one of the plurality of commutation patterns is selected depending on identification information (6) identifying the converter (2).

3. The method according to claim 1 or 2, wherein the one or the plurality of system state variables is or are received or detected via an external communication connection.

4. The method according to any one of claims 1 to 3, wherein the plurality of selectable commutation patterns, upon provision of an in-phase fundamental of the electrical variable, bring about harmonics which have different phase positions and in particular are out of phase.

5. The method according to any one of claims 1 to 4, wherein the plurality of commutation patterns differ from one another in terms of a switching specification and/or a switching frequency.

6. The method according to any one of claims 1 to 5, wherein the system state variables comprise at least one of the following variables:
an indication about an active and/or reactive power present at the coupling point (E);
an indication about a harmonic spectrum of the electrical variable at the connection point (5) in the electricity network (3);
an indication about an impedance or a frequency-dependent impedance profile of the electricity network (3) at least at one point of the AC electricity network;
an indication about an active and/or reactive power transmitted by the electricity network (3); and
an indication about a configuration of the energy distribution system,

7. The method according to any one of claims 1 to 6, wherein the commutation pattern comprises a predefined switching scheme or a switching scheme, in particular a carrier-based switching scheme, generated online.

8. An energy distribution system (1) comprising a plurality of converters (2) for feeding electrical energy provided by a plurality of sources into an AC electricity network (3) at a coupling point (E) or for drawing electrical energy from the AC electricity network (3) at the coupling point (E), wherein
the AC electricity network (3) can be connected to a further electricity supply network at a connection point (5) in order to feed the electrical energy to remote loads or to obtain the electrical energy from remote energy sources
each of the converters (2) has an inverter (21) provided with power switches for providing an electrical variable, and a control unit (24) for driving the inverter (21),
the control unit (24) is designed to obtain a system state variable indicating a system state of the AC electricity network (3), to select one of a plurality of commutation patterns depending on the system state variable, and to drive the inverter (21) according to the selected commutation pattern, **characterised in that**
the system state variable comprises a resonance frequency of the energy distribution system (1), and
the commutation pattern is selected such that a reduced or no excitation takes place at the resonance frequency.

9. The energy distribution system (1) according to claim 8, wherein the control unit (24) is designed to obtain the one or the plurality of system state variables via an external communication connection, and/or wherein the control unit (24) has a detection unit (25) in order to detect the one or the plurality of system state variables.

10. The energy distribution system (1) according to claim 8 or 9, wherein a storage unit for storing identification information (6) is provided, such that one of the plurality of commutation patterns is selected depending on the identification information (6) of the converter (2).

11. The energy distribution system (1) according to any one of claims 8 to 10 and comprising a load that obtains electrical energy via one of the converters (2), or an electrical energy source that feeds electrical energy into the AC electricity network (3) via one of the converters (2).

12. The energy distribution system (1) according to any one of claims 8 to 10, wherein the converters (2) are each operated with different selection schemes such that, in the case of an indicated system state, the converters (2) select commutation patterns which result in at least a partial cancellation for at least one harmonic of the electrical variable on the AC electricity network (3).

13. The energy distribution system (1) according to any one of claims 7 to 11, wherein the converters (2) are designed to be operated with respective commutation patterns which are dependent on the location of their respective coupling points (E) in the electricity network (3).

14. The energy distribution system (1) according to any one of claims 7 or 12, wherein at least two of the converters (2) are designed to be operated with complementary commutation patterns which bring about, out of phase, the electrical variables for at least one harmonic in the AC electricity network (3).

15. The energy distribution system (1) according to any one of claims 12 to 14, wherein a detection unit (25) is provided in order to detect the system state and to communicate it to one or a plurality of the converters (2).

16. The energy distribution system (1) according to any one of claims 12 to 15, wherein at least one filter unit is provided in order to carry out a filtering of harmonics in the electricity network (3) depending on the system state.

17. The energy distribution system (1) according to any one of claims 12 to 16, wherein the converters (2) are realised in each case with an assigned selection scheme, such that they are operated with commutation patterns with which the resulting defined harmonic spectrum on the AC electricity network (3) is minimised at least in a predefined frequency range.

18. A method for operating a plurality of converters (2) in an energy distribution system (1) according to any one of claims 12 to 17, wherein commutation patterns are selected by each of the converters (2) in the case of an indicated system state in accordance with the assigned selection scheme, such that at least a partial cancellation for at least one harmonic of the electrical variable occurs on the AC electricity network (3).

## Revendications

1. Procédé de fonctionnement d'un convertisseur (2) dans un système de distribution d'énergie (1), où de l'énergie électrique mise à disposition à partir d'une source est alimentée au niveau d'un point de couplage (E) dans un réseau de courant alternatif (3) par le convertisseur (2), ou de l'énergie électrique est prélevée au niveau d'un point de couplage (E) à partir du réseau de courant alternatif (3),
le réseau de courant alternatif (3) est couplé au niveau d'autres points de couplage (E) avec d'autres convertisseurs (2) pour l'alimentation ou le prélèvement d'énergie électrique,
le réseau de courant alternatif (3) peut être relié avec un autre réseau de distribution de courant au niveau d'un point de raccordement (5) afin d'amener l'énergie électrique à des consommateurs éloignés ou afin d'en obtenir de sources d'énergie éloignées, et
le convertisseur (2) présente un onduleur (23) muni de commutateurs de lignes afin de mettre à disposition une variable électrique, comprenant les étapes suivantes :
de mise à disposition d'une variable d'état de système qui indique un état de système du réseau de courant (3) ;
de choix d'un ou de plusieurs modèles de commutation en fonction de la variable d'état de système ; et
de mise en marche de l'onduleur (23) en fonction du modèle de commutation choisi, **caractérisé en ce que**
la variable d'état de système comprend une fréquence de résonance du système de distribution d'énergie (1), et
le modèle de commutation est choisi de telle manière qu'une sollicitation réduite ou qu'aucune sollicitation ne se produise pour la fréquence de résonance.

2. Procédé selon la revendication 1, dans lequel le modèle de commutation, parmi les nombreux modèles de commutation, dépendant d'une information d'identification (6) identifiant le convertisseur (2) est choisi.

3. Procédé selon la revendication 1 ou 2, dans lequel la ou les variables d'état de système sont reçues ou détectées par le biais d'une liaison de communication externe.

4. Procédé selon l'une des revendications 1 à 3, dans lequel les nombreux modèles de commutation éligibles provoquent des ondes harmoniques qui présentent différentes positions de phases et qui sont en particulier prévues en opposition de phase, lors de la mise à disposition d'une onde fondamentale de même phase de la variable électrique.

5. Procédé selon l'une des revendications 1 à 4, dans lequel les nombreux modèles de commutation se différentient les uns des autres par une règle de commutation et/ou une fréquence de commutation.

6. Procédé selon l'une des revendications 1 à 5, dans lequel les variables d'état de système comprennent au moins l'une des variables suivantes :
une indication concernant une puissance active et/ou une puissance réactive présente au niveau du point de couplage (E);
une indication concernant un spectre d'ondes harmoniques de la variable électrique au niveau du point de raccordement (5) dans le réseau de courant (3) ;
une indication concernant une impédance ou une évolution d'impédance en fonction de la fréquence du réseau de courant (3) au niveau d'au moins un point du réseau de courant alternatif ;
une indication concernant une puissance active, respectivement réactive, transmise par le réseau de courant (3) ; et
une indication concernant une configuration du système de distribution d'énergie.

7. Procédé selon l'une des revendications 1 à 6, dans lequel le modèle de commutation comprend un schéma de circuit prédéfini ou un schéma de circuit généré en ligne, notamment basé sur le porteur.

8. Système de distribution d'énergie (1) doté de plusieurs convertisseurs (2) pour l'alimentation d'énergie électrique mise à disposition par plusieurs sources dans un réseau de courant alternatif (3) au niveau d'un point de couplage (E) ou pour le prélèvement d'énergie électrique à partie du réseau de courant alternatif (3) au niveau d'un point de couplage (E), où
le réseau de courant alternatif (3) peut être relié avec un autre réseau de distribution de courant au niveau d'un point de raccordement (5) afin d'amener l'énergie électrique à des consommateurs éloignés ou d'en obtenir de sources d'énergie éloignées,
chaque convertisseur (2) présente un onduleur (21) muni d'interrupteurs de puissance pour la mise à disposition d'une variable électrique, ainsi qu'une unité de commande (24) pour la mise en marche de l'onduleur (21),
l'unité de commande (24) est conçue pour obtenir une variable d'état de système qui indique un état de système du réseau de courant alternatif (3), pour choisir l'un des modèles nombreux modèles de commutation en fonction de la variable d'état de système et pour mettre en marche l'onduleur (21) en fonction du modèle de commutation choisi, **caractérisé en ce que**
la variable d'état de système comprend une fréquence de résonance du système de distribution d'énergie (1), et
le modèle de commutation est choisi de telle manière qu'une sollicitation réduite ou qu'aucune sollicitation se produise pour la fréquence de résonance.

9. Système de distribution d'énergie (1) selon la revendication 8, dans lequel l'unité de commande (24) est conçue pour obtenir la ou les nombreuses variables d'état de système par le biais d'une liaison de communication externe et/ou dans lequel l'unité de commande (24) présente une unité de détection (25) afin de détecter la ou les nombreuses variables d'état de système.

10. Système de distribution d'énergie (1) selon la revendication 8 ou 9, dans lequel une unité de mémoire pour le stockage de l'information d'identification (6) est prévue de sorte que l'un des nombreux modèles de commutation est choisi en fonction de l'information d'identification (6) du convertisseur (2).

11. Système de distribution d'énergie (1) selon l'une des revendications 8 à 10 et doté d'un consommateur qui obtient de l'énergie électrique par le biais de l'un des convertisseurs (2), ou doté d'une source d'énergie électrique qui alimente de l'énergie électrique dans le réseau de courant alternatif (3) par le biais de l'un des convertisseurs (2).

12. Système de distribution d'énergie (1) selon l'une des revendications 8 à 10, dans lequel les convertisseurs (2) respectifs sont munis de divers schémas de sélection de sorte que, pour un état de système indiqué, des modèles de commutation sont choisis par les convertisseurs chez lesquels il y a au moins une extinction partielle sur le réseau de courant alternatif (3) pour au moins une onde harmonique de la variable électrique.

13. Système de distribution d'énergie (1) selon l'une des revendications 7 à 11, dans lequel les convertisseurs (2) sont mis en fonctionnement avec un modèle de commutation correspondant qui dépend du lieu de son point de couplage (E) respectif dans le réseau de courant (3).

14. Système de distribution d'énergie (1) selon l'une des revendications 7 à 12, dans lequel au moins deux des convertisseurs (2) sont conçus pour être mis en fonctionnement avec des modèles de commutation complémentaires qui font que les variables électriques pour au moins une onde harmonique dans le réseau de courant alternatif (3) soient en opposition de phases.

15. Système de distribution d'énergie (1) selon l'une des revendications 12 à 14, dans lequel il est prévu une unité de détection (25) afin de détecter l'état de système et pour communiquer au niveau d'un ou des nombreux convertisseurs (2).

16. Système de distribution d'énergie (1) selon l'une des revendications 12 à 15, dans lequel au moins une unité de filtrage est prévue afin de procéder à un filtrage d'ondes harmoniques dans le réseau de courant (3) en fonction de l'état de système.

17. Système de distribution d'énergie (1) selon l'une des revendications 12 à 16, dans lequel les convertisseurs (2) sont conçus respectivement avec un schéma de sélection associé, de sorte que ceux-ci puissent être mis en fonctionnement avec des modèles de commutation, chez lesquels le spectre des ondes harmoniques définies résultantes est minimisé au moins dans un domaine de fréquence prédéfini sur le réseau de courant alternatif (3).

18. Procédé de fonctionnement de plusieurs convertisseurs (2) dans un système de distribution d'énergie (1) selon l'une des revendications 12 à 17, dans lequel, pour un état de système indiqué, des modèles de commutation sont choisis selon le schéma de sélection correspondant de sorte qu'il y a au moins une extinction partielle sur le réseau de courant alternatif (3) pour au moins une onde harmonique de la variable électrique.
